# EUROPÄISCHE PATENTSCHRIFT

(11) **EP 2 083 185 B1**
(45) Veröffentlichungstag und Bekanntmachung des Hinweises auf die Patenterteilung: **17.11.2010**
(21) Anmeldenummer: 08015171.5
(22) Anmeldetag: 28.08.2008
(51) Int. Cl.: F16D 48/06

(54) **Verfahren zum Steuern einer Reibungskupplung**
Method for controlling a friction coupling
Procédé destiné à la commande d'un embrayage à friction

(30) Priorität: 10.09.2007 DE 102007043102
(43) Veröffentlichungstag der Anmeldung: 29.07.2009
(73) Patentinhaber: Schaeffler Technologies GmbH & Co. KG, 91074 Herzogenaurach (DE)
(72) Erfinder: Panzer, Matthias, 76137 Karlsruhe (DE)

(56) Entgegenhaltungen:
- DE-A1- 10 125 689
- DE-A1-102005 030 185

## Beschreibung

Die Erfindung betrifft ein Verfahren zum Steuern einer im Antriebsstrang eines Kraftfahrzeugs zwischen einer Brennkraftmaschine und einem Getriebe mit mehreren Gängen angeordneten automatisierten Reibungskupplung.

Verfahren zum Steuern von automatisierten Reibungskupplungen gemäß oben genannter Gattung sind bekannt. Der zurückgelegte Kupplungsweg derartiger Reibungskupplungen während einer Betätigung wird dabei von so genannten Inkrementalwegsensoren erfasst, die Weginkremente zählen und daher nur relative Kupplungswege erfassen können und zur absoluten Erfassung des Kupplungsweges kalibriert werden müssen. Im Stand der Technik werden verschiedene Möglichkeiten zur Kalibrierung vorgeschlagen. Als Beispiel sei die DE 10 2005 028 844 A1erwähnt. Hier wird die Reibungskupplung vollständig geöffnet und an diesem Punkt ein Wegsensor kalibriert. Ein weiteres Beispiel ist in der DE 10 2005 030 185 A1 offenbart. Hier wird ein Verfahren zum Referenzieren eines Inkrementalwegsensors in einer elektronisch gesteuerten Betätigungsvorrichtung einer Kupplung im Antriebsstrang eines fahrenden Fahrzeugs offenbart, wobei die Betätigungsvorrichtung einen Speicher enthält, in dem eine Kennlinie gespeichert ist, die das Kupplungsmoment abhängig von der Stellung eines Betätigungselements angibt. Unter anderem wird die aktuelle Stellung des Betätigungselements aus dem aktuellen Kupplungsmoment und der Kennlinie bestimmt.

In einzelnen Fällen kann es vorkommen, dass ein Inkrementalwegsensor während einer Fahrt des Kraftfahrzeugs nach einer Kalibrierung eine Störung aufweist. Wird diese Störung beispielsweise durch eine Überwachung und Plausibilisierung der Sensorsignale erkannt, muss eine erneute Kalibrierroutine erfolgen. Gemäß dem Stand der Technik wird hierzu die Reibungskupplung geöffnet, ein eingelegter Gang ausgelegt, eine neutrale Getriebeposition eingelegt, der Kupplungsweg von der geöffneten Stellung bis zur geschlossenen Stellung der Reibungskupplung ausgemessen und der Wegsensor neu kalibriert.

Aufgabe der vorliegenden Erfindung ist, eine derartige Kalibrierroutine zu verkürzen.

Die Aufgabe wird durch ein Verfahren zum Steuern einer im Antriebsstrang eines Kraftfahrzeugs zwischen einer Brennkraftmaschine und einem Getriebe mit mehreren Gängen angeordneten automatisierten Reibungskupplung mit einem zwischen einem geöffneten und einem geschlossenen Zustand zu durchfahrenden Kupplungsweg gelöst, wobei der Kupplungsweg anhand sich über den Kupplungsweg ändernden Weginkrementen eines Sensors erfasst und der Sensor bei vollständig geöffneter Reibungskupplung an einer vorgegebenen Position kalibriert wird und bei Verlust der Kalibration die Reibungskupplung gegenüber einem Schließvorgang bei ordnungsgemäßer Kalibration verlangsamt geschlossen wird.

Bei der automatisierten Reibungskupplung kann es sich um eine oder zwei zu einer Doppelkupplung zusammengefasste, im entspannten Zustand geschlossene (normally closed) oder bevorzugterweise um im entspannten Zustand offene Reibungskupplungen (normally open) handeln, die ohne Betätigungskraft des Kupplungsaktors selbstständig in den offenen Zustand zurückkehren und dabei eine von mehreren möglichen Positionen zur Kalibration einnehmen. Alternative oder weitere Positionen können aktiv mittels des Kupplungsaktors angefahren werden, beispielsweise können solche Positionen durch harte oder elastische Anschläge definiert sein.

Als Sensoren zur Erfassung von Weginkrementen können Inkrementalwegsensoren vorgesehen sein, die in bevorzugter Weise bereits in so genannten elektronisch kommutierten Elektromotoren, die den Antrieb für den Kupplungsaktor bilden, zu dessen Kommutierung enthalten sind. Bei Kenntnis der zwischen dem Drehwinkel dieser Elektromotoren und der aus diesem resultierenden Kupplungsweg eingestellten Übersetzung kann auf zusätzliche Sensoren verzichtet werden. Wird bei einer Überwachung dieser Inkrementalwegsensoren ein Messfehler oder eine Störung festgestellt, kann in vorteilhafter Weise das vorgeschlagene Verfahren gestartet werden. Andere nicht plausible Zustandsgrößen der Reibungskupplung, beispielsweise ein bei einem vorgegebenen Kupplungsweg nicht erwarteter Schlupf, ein zu hohes über die Reibungskupplung übertragenes Moment oder ein unerwartetes Drehzahlverhalten der Brennkraftmaschine können alternativ oder zusätzlich als Indikator für einen Verlust der Kalibration zum Start des Verfahrens herangezogen werden.

Wird auf Verlust der Kalibration erkannt, wird die Reibungskupplung dennoch vorsichtig, dies bedeutet langsamer als während eines Kupplungsvorgangs ohne Verlust der Kalibration, geschlossen. Dies bedeutet bei einer Schaltung von einem eingelegten Gang in einen neuen Zielgang zwar einen Zeitverlust, dieser fällt aber bedeutend geringer aus als eine neue Kalibrierroutine, bei der das Getriebe zuerst in eine Neutralstellung geschaltet werden muss, um die Reibungskupplung sicher schließen zu können. Durch das langsame Schließen der Reibungskupplung sind insbesondere bei hohen Fahrgängen, die keine typischen Anfahrgänge sind, wie beispielsweise der dritte und höhere Gänge, keine sicherheitsrelevanten Folgen zu erwarten. Insbesondere wird vorgeschlagen, eine Auswahl der Gänge, bei der das Verfahren angewendet werden kann, auf derartige Gänge, die nicht als Anfahrgänge genutzt werden zu beschränken. Alternativ oder zusätzlich kann die minimale Fahrgeschwindigkeit des Kraftfahrzeuges, beispielsweise auf 30km/h vorzugsweise 50km/h begrenzt werden, um ein Anrollen des Fahrzeuges bei der Durchführung des Fahrzeuges aus dem Fahrzeugstillstand oder eine ungewollt starke Beschleunigung bei kleinen Fahrgeschwindigkeiten zu verhindern. Es hat sich gezeigt, dass bei höheren Fahrgeschwindigkeiten allenfalls ein leichter Komfortverlust während eines langsamen Schließens der Reibungskupplung eintritt, der aber den Komfortverlust bei Anstoßen einer erneuten Kalibrierroutine bei Verlust der Kalibration bei weitem aufhebt.

Weiterhin kann vorgesehen sein, dass die Reibungskupplung vollständig bis zu einer vorgegebenen Schließposition geschlossen wird und bei Erreichen dieser Schließposition der Sensor kalibriert wird. Auf diese Weise wird beim Schließen der Reibungskupplung bereits eine neue Position zum Kalibrieren des Sensors auf den Kupplungsweg angefahren, so dass ein Ersatz für die verloren gegangene Kalibration sehr schnell zur Verfügung steht. Als Position für die Kalibration kann die Schließposition der Reibungskupplung vorgesehen sein, beispielsweise ein Kupplungsweg, bei dem die Reibungskupplung maximal geschlossen ist. Diese Schließposition kann mittels eines mechanischen Anschlages, der als harter oder elastischer Anschlag ausgeführt sein kann, definiert sein. Weiterhin kann der an der Reibungskupplung auftretende Schlupf ausgewertet werden und eine Schließposition bei einem vorgegebenen Kupplungsweg dann erkannt werden, wenn der Schlupf zu null wird oder einen vorgegebenen Wert, beispielsweise 50 Umdrehungen pro Minute unterschreitet. Weiterhin kann ein aus Motordaten abgeleitetes, über die Reibungskupplung übertragenes Drehmoment als Größe für die Schließposition herangezogen werden.

Das vorgeschlagene Verfahren kann weiterhin einen Verfahrensschritt enthalten, nach dem zuvor die Einlegebedingungen eines neu einzulegenden Ganges geprüft werden. Kann dieser Zielgang nur erschwert eingelegt werden, kann davon ausgegangen werden, dass die Reibungskupplung nicht momentenfrei ist, das heißt infolge des Verlusts der Kalibration nicht vollständig geöffnet ist. In diesem Fall kann im Verfahren vorgesehen sein, dass ein langsames Schließen unterbrochen oder erst gar nicht eingeleitet wird und anstatt dessen eine gewöhnliche Kalibrierroutine angestoßen wird. Weiterhin kann das Verfahren so ausgestaltet sein, dass eine Unterbrechung erschwert ist, indem beispielsweise während des langsamen Schließens der Reibungskupplung ansonsten während einer Schaltung mögliche Einflüsse wie beispielsweise ein Fahrerwunsch unterdrückt werden. Beispielsweise haben während der Durchführung des Verfahrens Änderungen der Stellungen des Fahrpedals und/oder Bremspedals in bevorzugter Weise keine Auswirkung auf die Durchführung des Verfahrens. Insbesondere werden so genannte Segelvorgänge des Kraftfahrzeuges, bei der bei nicht betätigtem Gaspedal die Reibungskupplung geöffnet wird, unterdrückt. Es versteht sich, dass das Verfahren bei entsprechenden Fahrsituationen, beispielsweise bei drohendem Abwürgen der Brennkraftmaschine bei Geschwindigkeitsverringerung während eines Abbremsens des Fahrzeugs, abgebrochen werden kann. Bei derartigen Fahrsituationen kann zur Minimierung des Abwürgens unterstützend ein Eingriff in die Steuerung der Brennkraftmaschine zur Reduzierung des von dieser abgegebenen Moments erfolgen.

Das Verfahren wird in vorteilhafter Weise mittels einer automatisierten Reibungskupplung im Antriebsstrang eines Kraftfahrzeugs mit zumindest einem relative Wegunterschiede erfassenden Sensor und einem Sensorsignale des Sensors erfassenden und einem Kupplungsaktor zur Betätigung der Reibungskupplung steuernden Steuergerät durchgeführt. Dabei kann der Kupplungsaktor mittels eines elektronisch kommutierten Elektromotors betrieben werden, dessen Inkrementalwegsensoren zugleich als Kupplungswegsensoren eingesetzt werden.

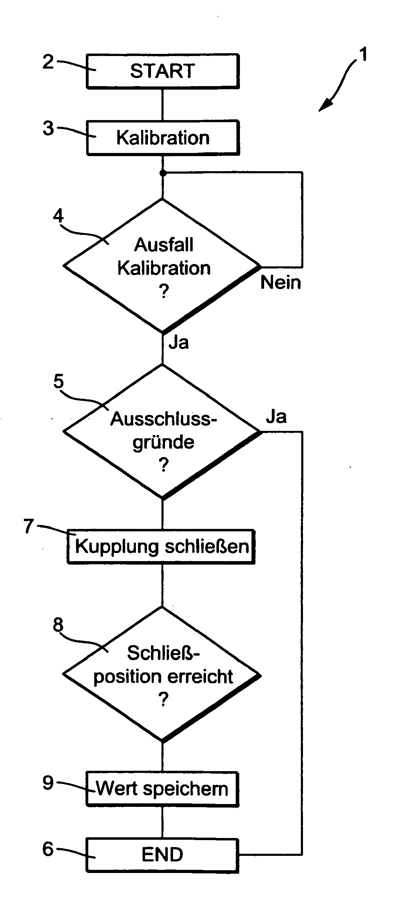

Die Erfindung wird anhand einer einzigen Figur naher erläutert. Das Ausführungsbeispiel einer Programmroutine 1 zur Durchführung des Verfahrens beginnt mit Block 2. In Block 3 wird eine Kalibrierroutine durchgeführt. In der Verzweigung 4 wird zyklisch überprüft, ob die kalibrierten Daten noch plausibel sind. Diese Überprüfung kann anhand anderer Überprüfungsroutinen erfolgen. Beispielsweise können die Signale von Inkrementalwegsensoren, die beispielsweise Hall-Sensoren sein können, eines elektronisch kommutierten Elektromotors in der Weise plausibilisiert werden, dass deren Erregungsmuster laufend überprüft wird. Wird ein Fehlermuster erkannt, kann ein Fehlerflag oder -bit gesetzt werden, das dann in der Verzweigung 4 den Ausfall der Kalibration indiziert. Unter Ausfall oder Verlust der Kalibration ist der Verlust einer eindeutigen Zuordnung einer Änderung des Sensorsignals zu einer absoluten Kupplungswegänderung zu verstehen.

Ist ein derartiger Verlust eingetreten, wird in Verzweigung 5 geprüft, ob ein oder mehrere Ausschlussgründe für ein langsames Schließen der Reibungskupplung vorliegen. Ausschlussgründe können beispielsweise vorliegen, wenn ein Anfahrgang als Zielgang eingelegt ist oder ein neu einzulegender Gang ein Anfahrgang ist, die Fahrgeschwindigkeit unter einem vorgegebenen Wert von beispielsweise 50km/h ist oder ein einzulegender Gang nicht oder nur unter erschwerten Bedingungen einlegbar ist. Wenn zumindest eines dieser Kriterien erfüllt ist, wird die Programmroutine 1 in Block 6 beendet. Alternativ kann eine gewöhnliche Kalibration angestoßen werden, indem zu Block 3 zurückgekehrt wird. Liegen keine Ausschlussgründe vor, wird die Reibungskupplung in Block 7 langsam und vollständig geschlossen. Die Bewegung des Kupplungsaktors kann dabei gesteuert oder geregelt erfolgen. Ist eines oder mehrere Signale der Inkrementalwegsensoren immer noch nicht plausibel, kann es empfehlenswert sein, den Aktor mit einer Energieversorgung, die ein langsames Schließen erwarten lässt, zu beaufschlagen.

Nach Erreichen eines geschlossenen Zustands der Reibungskupplung, die einer gewünschten Schließposition der Reibungskupplung entspricht, die in der Verzweigung auf Erreichen geprüft wird, wird diese Position als neuer Kalibrierwert in Block 9 vom im Kupplungssteuergerät gespeicherten Programm zur Durchführung der Kupplungsbetätigung übernommen. Dies bedeutet, dass im zugehörigen Kupplungssteuergerät der entsprechenden Kupplungsposition eine Größe zugeordnet wird, von der in den einzelnen Weginkrementen weitergezählt wird, wobei aus der Kinematik des Kupplungsaktors bekannt ist, welchem Kupplungsweg ein Weginkrement entspricht. Hierzu sei noch angemerkt, dass bei einer grundlegenden Kalibrierroutine entsprechend Block 3 zwei weit auseinander liegende Positionen des Kupplungsweges der Reibungskupplung festgelegt und die Anzahl der Inkremente bestimmt werden können, so dass bei bekanntem Abstand zwischen den beiden Positionen und Abzählen der Weginkremente auch die Länge eines Weginkrements bestimmt werden kann. Die Methode der Nullpunktkalibrierung kann dagegen bei jedem Öffnen der Reibungskupplung ohne großen Zeitverlust erfolgen, wobei eine Störung dieser mit dem Verfahren entsprechend der Programmroutine 1 kompensiert werden kann.

### Bezugszeichenliste

- 1: Programmroutine
- 2: Block
- 3: Block
- 4: Verzweigung
- 5: Verzweigung
- 6: Block
- 7: Block
- 8: Verzweigung
- 9: Block

## Patentansprüche

1. Verfahren zum Steuern einer im Antriebsstrang eines Kraftfahrzeugs zwischen einer Brennkraftmaschine und einem Getriebe mit mehreren Gängen angeordneten automatisierten Reibungskupplung mit einem zwischen einem geöffneten und einem geschlossenen Zustand zu durchfahrenden Kupplungsweg, wobei der Kupplungsweg anhand sich über den Kupplungsweg ändernden Weginkrementen eines Sensors erfasst und der Sensor bei vollständig geöffneter Reibungskupplung an einer vorgegebenen Position kalibriert wird, **dadurch gekennzeichnet, dass** bei Verlust der Kalibration die Reibungskupplung gegenüber einem Schließvorgang bei ordnungsgemäßer Kalibration verlangsamt geschlossen wird.

2. Verfahren nach Anspruch 1, **dadurch gekennzeichnet, dass** die Reibungskupplung vollständig bis zu einer vorgegebenen Schließposition geschlossen wird und bei Erreichen dieser Schließposition der Sensor kalibriert wird.

3. Verfahren nach einem der Ansprüche 1 oder 2, **dadurch gekennzeichnet, dass** das Verfahren auf eine Auswahl von Gängen, die beim Schließen der Reibungskupplung eingelegt sind, beschränkt wird.

4. Verfahren nach Anspruch 3, **dadurch gekennzeichnet, dass** die Auswahl Gänge umfasst, die nicht zum Anfahren des Kraftfahrzeuges benutzt werden.

5. Verfahren nach einem der Ansprüche 1 bis 4, **dadurch gekennzeichnet, dass** das Verfahren oberhalb einer vorgegebenen Fahrgeschwindigkeit des Kraftfahrzeuges durchgeführt wird.

6. Verfahren nach einem der Ansprüche 1 bis 5, **dadurch gekennzeichnet, dass** die Reibungskupplung erst geschlossen wird, wenn ein einzulegender Gang ordnungsgemäß eingelegt worden ist.

7. Verfahren nach einem der Ansprüche 2 bis 6, **dadurch gekennzeichnet, dass** die Schließposition durch Auswerten eines an der Reibungskupplung vorliegenden Schlupfes erkannt wird.

8. Verfahren nach einem der Ansprüche 2 bis 6, **dadurch gekennzeichnet, dass** die Schließposition durch einen Anschlag in der Reibungskupplung festgelegt wird.

## Claims

1. Method for controlling an automated friction clutch which is arranged in the drive train of a motor vehicle between an internal combustion engine and a gearbox having a plurality of gear speeds, said friction clutch having a clutch travel which is to be passed through between an opened state and a closed state, wherein the clutch travel is detected on the basis of travel increments of a sensor which change over the clutch travel, and when the friction clutch is completely open the sensor is calibrated at a predefined position, **characterized in that** when the calibration is lost, the friction clutch is closed more slowly than in the case of a closing process with satisfactory calibration.

2. Method according to Claim 1, **characterized in that** the friction clutch is closed completely up to a predefined closing position, and the sensor is calibrated when this closing position is reached.

3. Method according to one of Claims 1 or 2, **characterized in that** the method is restricted to a selection of gear speeds which are engaged when the friction clutch closes.

4. Method according to Claim 3, **characterized in that** the selection comprises gears speeds which are not used to start the motor vehicle.

5. Method according to one of Claims 1 to 4, **characterized in that** the method is carried out above a predefined velocity of the motor vehicle.

6. Method according to one of Claims 1 to 5, **characterized in that** the friction clutch is not closed until a gear speed which is to be engaged has been satisfactorily engaged.

7. Method according to one of Claims 2 to 6, **characterized in that** the closing position is detected by evaluating a slip which is present at the friction clutch.

8. Method according to one of Claims 2 to 6, **characterized in that** the closing position is defined by means of a stop in the friction clutch.

## Revendications

1. Procédé pour commander un embrayage à friction automatisé disposé dans la chaîne cinématique d'un véhicule automobile entre un moteur à combustion interne et une boîte de vitesses avec plusieurs vitesses, avec une course d'embrayage à parcourir entre un état ouvert et un état fermé, la course d'embrayage étant détectée à l'aide d'incréments de course d'un capteur variant sur la course d'embrayage, et le capteur étant calibré à une position prédéterminée lorsque l'embrayage à friction est complètement ouvert, **caractérisé en ce que** dans le cas d'une perte de calibrage, l'embrayage à friction est fermé plus lentement par rapport à une opération de fermeture en cas de calibrage normal.

2. Procédé selon la revendication 1, **caractérisé en ce que** l'embrayage à friction est complètement fermé jusqu'à une position de fermeture prédéfinie et le capteur est calibré une fois cette position de fermeture atteinte.

3. Procédé selon l'une quelconque des revendications 1 ou 2, **caractérisé en ce que** le procédé est limité à une sélection de vitesses qui sont enclenchées lors de la fermeture de l'embrayage à friction.

4. Procédé selon la revendication 3, **caractérisé en ce que** la sélection comprend des vitesses qui ne sont pas utilisées pour faire démarrer le véhicule automobile.

5. Procédé selon l'une quelconque des revendications 1 à 4, **caractérisé en ce que** le procédé est mis en oeuvre au-dessus d'une vitesse de conduite prédéfinie du véhicule automobile.

6. Procédé selon l'une quelconque des revendications 1 à 5, **caractérisé en ce que** l'embrayage à friction est seulement fermé une fois qu'une vitesse à enclencher a été enclenchée correctement.

7. Procédé selon l'une quelconque des revendications 2 à 6, **caractérisé en ce que** la position de fermeture est reconnue par analyse d'un glissement existant au niveau de l'embrayage à friction.

8. Procédé selon l'une quelconque des revendications 2 à 6, **caractérisé en ce que** la position de fermeture est fixée par une butée dans l'embrayage à friction.
